# EUROPEAN PATENT APPLICATION

(11) **EP 4 769 344 A1**
(43) Date of publication of application: **01.07.2026**
(21) Application number: 25221373.1
(22) Date of filing: 08.12.2025
(51) Int. Cl.: G07C 9/00, G07C 9/27

(54) **SYSTEM AND METHOD FOR CONTROLLING ACCESS TO A FACILITY VIA AN ACCESS CONTROL SYSTEM DURING A FACILITY LOCKDOWN EVENT**

(30) Priority: 31.12.2024 US 202419007202
(71) Applicant: Honeywell International Inc., Charlotte, NC 28202 (US)
(72) Inventor: MENON, Chithira P S, Charlotte, 28202 (US); JEEVAN, Senthil Kumar Somi, Charlotte, 28202 (US); V, Thiruppathi, Charlotte, 28202 (US); SIVARAM, Vikramraj, Charlotte, 28202 (US); BHATHEY, Balaji Sivakumar, Charlotte, 28202 (US)
(74) Representative: Haseltine Lake Kempner LLP

(57) **Abstract**

An access control system and method for controlling access to facility regions includes storing access credentials for authorized users, with each access credential having access permissions and in some cases predefined expertise certifications. Access control readers receive access requests containing access credentials. In a non-lockdown mode of the facility, access is granted or denied based on the assigned access permissions. In a lockdown mode, access to lockdown regions is denied even with valid access permissions, unless the access credential is also associated with required expertise certifications. The lockdown mode can be classified into predefined lockdown types, each assigned specific expertise certifications. Lockdown type classification can occur manually through operator input or automatically based on LLM analysis of video streams and/or sensor outputs.

## Description

### TECHNICAL FIELD

The present disclosure relates generally to access control systems, and more particularly to systems and methods for controlling access to a facility via an access control system during a facility lockdown event.

### BACKGROUND

Access control systems are commonly used to regulate and control access to various locations within a facility. Some individuals have higher security clearance and thus have access to more locations within the facility than other individuals who have relatively lower security clearance. In some cases, an emergency may occur, necessitating locking down part or all of the facility. Depending on the nature of the emergency, there may be individuals who should be granted access because they are qualified to address whatever the emergency is. For example, if there is an electrical problem in a locked region of the facility, an electrician may be deemed qualified to enter the locked region in order to address the electrical problem. If there is a chemical spill in a region of the facility, certain individuals may be trained to clean up a chemical spill, and thus would be deemed to be qualified to enter the locked region. What would be desired are ways to automatically determine which individuals that are registered with the access control system are qualified to address a suspected problem that has led to part or all of the facility being locked down, and allow access to those qualified individuals to the locked down location(s) while preventing access to unqualified individuals.

### SUMMARY

The present disclosure relates generally to access control systems, and more particularly to systems and methods for controlling access to a facility via an access control system during a facility lockdown event. An example may be found in an access control system for controlling access to each of one or more regions of a facility. The illustrative access control system includes a memory for storing a plurality of access credentials each associated with a respective authorized user of the facility, wherein each of the plurality of access credentials is assigned one or more access permissions that define access rights for the respective authorized user to access each of the one or more regions of the facility, and wherein each of one or more of the plurality of access credentials is assigned one or more of a plurality of predefined expertise certifications that are associated with the respective authorized user. The access control system includes a plurality of access control readers each associated with at least one region of the one or more regions of the facility, wherein each access control reader is configured to receive an access request from a respective authorized user where the access request includes the respective access credential associated with the respective authorized user. The access control system includes a controller that has a non-lockdown mode and a lockdown mode. When in the non-lockdown mode, and in response to receiving an access request at a respective one of the plurality of access control readers from a respective authorized user, the controller is configured to grant or deny access to the at least one region of the facility that is associated with the access control reader based at least in part on the one or more access permissions assigned to the access credential that is associated with the access request. When in the lockdown mode, the controller is configured to lock down one or more lockdown regions of the facility by denying access to the one or more lockdown regions even when an access request is received that is assigned one or more access permissions that would otherwise grant access to the corresponding one or more lockdown regions in the non-lockdown mode, unless the access credential associated with the access request is assigned one or more predefined expertise certifications in which case not denying access to the one or more lockdown regions. In some cases, in the lockdown mode, access is granted only when the access request is assigned one or more access permissions that would otherwise grant access to the corresponding one or more lockdown regions in the non-lockdown mode and the access credential associated with the access request is assigned one or more predefined expertise certifications.

Another example may be found in a method for controlling access to each of one or more regions of a facility. The method includes storing a plurality of access credentials each associated with a respective authorized user of the facility, wherein each of the plurality of access credentials is assigned one or more access permissions that define access rights for the respective authorized user to access each of the one or more regions of the facility, and wherein each of one or more of the plurality of access credentials is assigned one or more of a plurality of predefined expertise certifications that are associated with the respective authorized user. Access requests are received at an access control reader of an access control system of the facility from a respective authorized user for accessing at least one region of the one or more regions of the facility, where the access request includes the respective access credential associated with the respective authorized user. In a non-lockdown mode, in response to receiving the access request from the respective authorized user, access to the at least one region of the facility that is associated with the access control reader is granted or denied based at least in part on the one or more access permissions assigned to the access credential that is associated with the access request. In a lockdown mode, the method includes locking down one or more lockdown regions of the facility by denying access to the one or more lockdown regions even when the access request is assigned one or more access permissions that would otherwise grant access to the corresponding one or more lockdown regions in the non-lockdown mode, unless the access credential associated with the access request is assigned one or more predefined expertise certifications in which case not denying access to the one or more lockdown regions. In some cases, in the lockdown mode, access is granted only when the access request is assigned one or more access permissions that would otherwise grant access to the corresponding one or more lockdown regions in the non-lockdown mode and the access credential associated with the access request is assigned one or more predefined expertise certifications.

Another example may be found in a non-transitory computer readable medium storing instructions. When the instructions are executed by one or more processors, the one or more processors are caused to store a plurality of access credentials each associated with a respective authorized user of a facility, wherein each of the plurality of access credentials is assigned one or more access permissions that define access rights for the respective authorized user to access each of one or more regions of the facility, and wherein each of one or more of the plurality of access credentials is assigned one or more of a plurality of predefined expertise certifications that are associated with the respective authorized user. The one or more processors are caused to receive an access request at an access control reader of an access control system of the facility from a respective authorized user for accessing at least one region of the one or more regions of the facility, where the access request includes the respective access credential associated with the respective authorized user. In a non-lockdown mode, in response to receiving the access request from the respective authorized user, the one or more processors are caused to grant or deny access to the at least one region of the facility that is associated with the access control reader based at least in part on the one or more access permissions assigned to the access credential that is associated with the access request. In a lockdown mode, the one or more processors are caused to lock down one or more lockdown regions of the facility by denying access to the one or more lockdown regions even when the access request is assigned one or more access permissions that would otherwise grant access to the corresponding one or more lockdown regions in the non-lockdown mode, unless the access credential associated with the access request is assigned one or more predefined expertise certifications in which case not denying access to the one or more lockdown regions. In some cases, in the lockdown mode, access is granted only when the access request is assigned one or more access permissions that would otherwise grant access to the corresponding one or more lockdown regions in the non-lockdown mode and the access credential associated with the access request is assigned one or more predefined expertise certifications.

The preceding summary is provided to facilitate an understanding of some of the innovative features unique to the present disclosure and is not intended to be a full description. A full appreciation of the disclosure can be gained by taking the entire specification, claims, figures, and abstract as a whole.

### BRIEF DESCRIPTION OF THE FIGURES

The disclosure may be more completely understood in consideration of the following description of various examples in connection with the accompanying drawings, in which:
Figure 1 is a schematic block diagram showing an illustrative access control system;
Figures 2A and 2B are flow diagrams that together show an illustrative method for controlling access to each of one or more regions within a facility;
Figure 3 is a schematic block diagram providing an overview of an access control system;
Figure 4 is a schematic block diagram providing an overview of a lockdown event in an access control system; and
Figure 5 is an example screenshot of an operator console that may be used to identify authorized users that have predefined expertise certifications for various types of lockdown events.

While the disclosure is amenable to various modifications and alternative forms, specifics thereof have been shown by way of example in the drawings and will be described in detail. It should be understood, however, that the intention is not to limit the disclosure to the particular examples described. On the contrary, the intention is to cover all modifications, equivalents, and alternatives falling within the spirit and scope of the disclosure.

### DESCRIPTION

The following description should be read with reference to the drawings, in which like elements in different drawings are numbered in like fashion. The drawings, which are not necessarily to scale, depict examples that are not intended to limit the scope of the disclosure. Although examples are illustrated for the various elements, those skilled in the art will recognize that many of the examples provided have suitable alternatives that may be utilized.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic may be applied to other embodiments whether or not explicitly described unless clearly stated to the contrary.

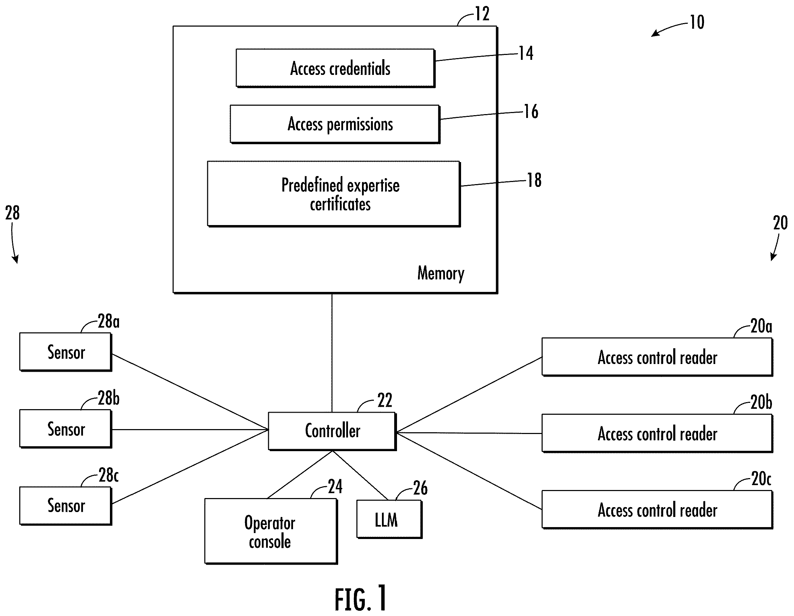

Figure 1 is a schematic block diagram showing an illustrative access control system 10 that controls access to each of one or more different regions within a facility. The illustrative access control system 10 includes a memory 12 for storing a plurality of access credentials 14 each associated with a respective authorized user of the facility, wherein each of the plurality of access credentials 14 is assigned one or more access permissions 16 that define access rights for the respective authorized user to access each of the one or more regions of the facility, and wherein each of one or more of the plurality of access credentials 14 may be assigned one or more of a plurality of predefined expertise certifications 18 that are associated with the respective authorized user. The illustrative access control system 10 includes a plurality of access control readers 20, individually labeled as 20a, 20b, and 20c. While three access control readers 20 are shown, the access control system 10 may include any number of access control readers 20, and in some cases may include considerably more than three access control readers 20, particularly if the facility is large. Each of the access control readers 20 may be associated with at least one region of the one or more regions of the facility. Each access control reader 20 may be configured to receive an access request from a respective authorized user, where the access request includes the respective access credential 14 that is associated with the respective authorized user. In some cases, the access control readers 20 may be card readers configured to receive an access request by reading an access control card carried by an authorized user (e.g. via card swipes). In some cases, the access control readers 20 may include a key pad for receiving a pin code from an authorized user, a biometric scanner for receiving biometric information (fingerprint, retinal scan, facial recognition) from the authorized user and/or any other suitable device for receiving identifying information of the authorized user. In some cases, the access control readers 20 may be a wireless reader configured to receive an access request by reading a wireless access request provided by a mobile device, an RFID tag, and/or any other suitable portable device carried by an authorized user. These are just examples.

The access control system 10 includes a controller 22 that has a non-lockdown mode and a lockdown mode. The access control system 10 includes an operator console 24 that may be configured to accept operator inputs from an operator or other user. In some cases, the controller 22 may be operatively coupled with a Large Language Model (LLM) 26. The access control system 10 may include sensors 28, individually labeled as 28a, 28b, and 28c. While a total of three sensors 28 are shown, the access control system 10 may include any number of sensors 28. Each of the sensors 28 may include one or more of the plurality of access control readers 20. Each of the sensors 28 may be one or more of a motion sensor, a smoke sensor, a voltage sensor, a current sensor, a glass break sensor, a gunshot detector, a microphone, a leak sensor, a water sensor, a chemical sensor, a video camera with video analytics, and a video camera without video analytics. These are just examples.

When the controller 22 is in the non-lockdown mode, and in response to receiving an access request at a respective one of the plurality of access control readers 20 from a respective authorized user, the controller 22 is configured to grant or deny access to the at least one region of the facility that is associated with the access control reader 20 based at least in part on the one or more access permissions assigned to the access credential that is associated with the access request. When the controller 22 is in the lockdown mode, the controller 22 is configured to lock down one or more lockdown regions of the facility by denying access to the one or more lockdown regions even when an access request is received that is assigned one or more access permissions that would otherwise grant access to the corresponding one or more lockdown regions in the non-lockdown mode, unless the access credential associated with the access request is assigned one or more predefined expertise certifications in which case not denying access to the one or more lockdown regions. In some cases, in the lockdown mode, access is granted only when the access request is assigned one or more access permissions that would otherwise grant access to the corresponding one or more lockdown regions in the non-lockdown mode and the access credential associated with the access request is assigned one or more predefined expertise certifications.

In some cases, the lockdown mode may be classified into one or more of a plurality of predefined lockdown mode types, wherein each of the plurality of predefined lockdown mode types may be assigned one or more of the plurality of predefined expertise certifications. In some cases, the predefined lockdown mode types may include one or more of a chemical lockdown mode type, an electrical lockdown mode type and a fire lockdown mode type. When in the lockdown mode, the one or more lockdown regions of the facility are locked down by denying access to the one or more lockdown regions even when an access request is received that is assigned one or more access permissions that would otherwise grant access to the corresponding one or more lockdown regions in the non-lockdown mode, unless the access credential associated with the access request is assigned one or more of the plurality of predefined expertise certifications that is assigned to the predefined lockdown mode type of the lockdown mode, in which case, not denying access to the one or more lockdown regions. In some cases, the controller 22 may be configured to receive an input from an operator of the access control system 10, wherein the input manually classifies the lockdown mode into one or more of the plurality of predefined lockdown mode types. In some cases, the controller 22 may be configured to automatically classify the lockdown mode into one or more of the plurality of predefined lockdown mode types based at least in part on input from one or more sensors 28. In some cases, the controller 22 may be configured to automatically classify the lockdown mode into one or more of the plurality of predefined lockdown mode types based at least in part on one or more operator notes manually entered by the operator of the access control system. In some cases, the sensors 28 may include a video camera that provides a video stream. The controller 22 may be configured to automatically classify the lockdown mode into one or more of the plurality of predefined lockdown mode types based at least in part an output of the LLM 26 that is configured to generate contextual information of at least part of the video stream captured by the video camera and/or outputs from one or more of the sensors 28.

In some cases, once in the lockdown mode, the controller 22 may provide a listing of authorized users to an operator of the access control system 10 that have access credentials that are assigned one or more of the plurality of predefined expertise certifications. In some cases, once in a lockdown mode that is classified into a particular one of the plurality of predefined lockdown mode types, the controller 22 may provide a listing of authorized users to an operator of the access control system 10 that have access credentials assigned one or more of the plurality of predefined expertise certifications that is assigned to the particular one of the plurality of predefined lockdown mode types of the lockdown mode. In some cases, the controller 22 may be configured to receive from the operator of the access control system 10 a selection of one or more of the authorized users from the listing of authorized users to grant access to the one or more lockdown regions, and to deny access to the unselected authorized users on the listing of authorized users.

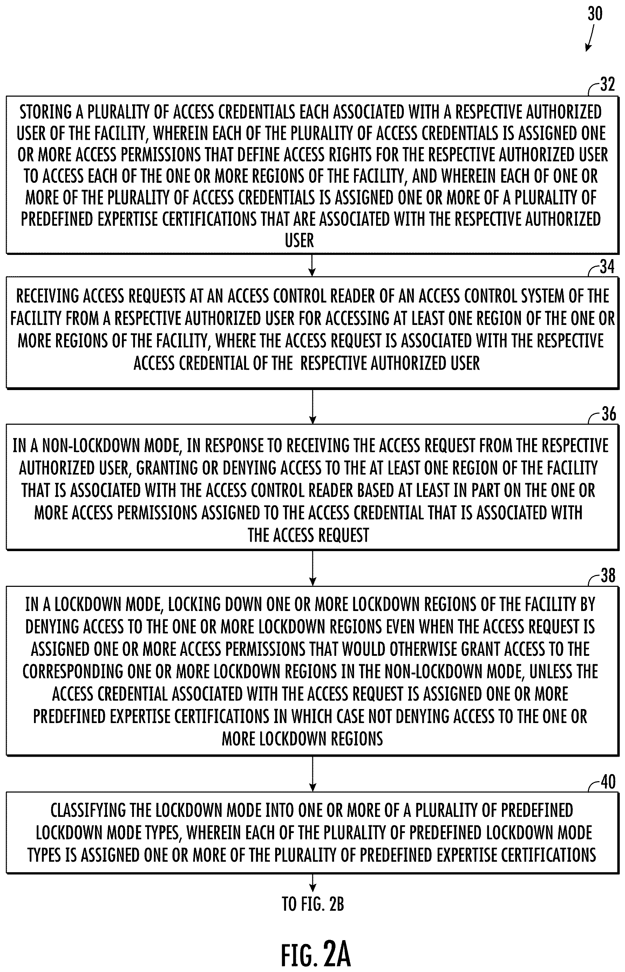

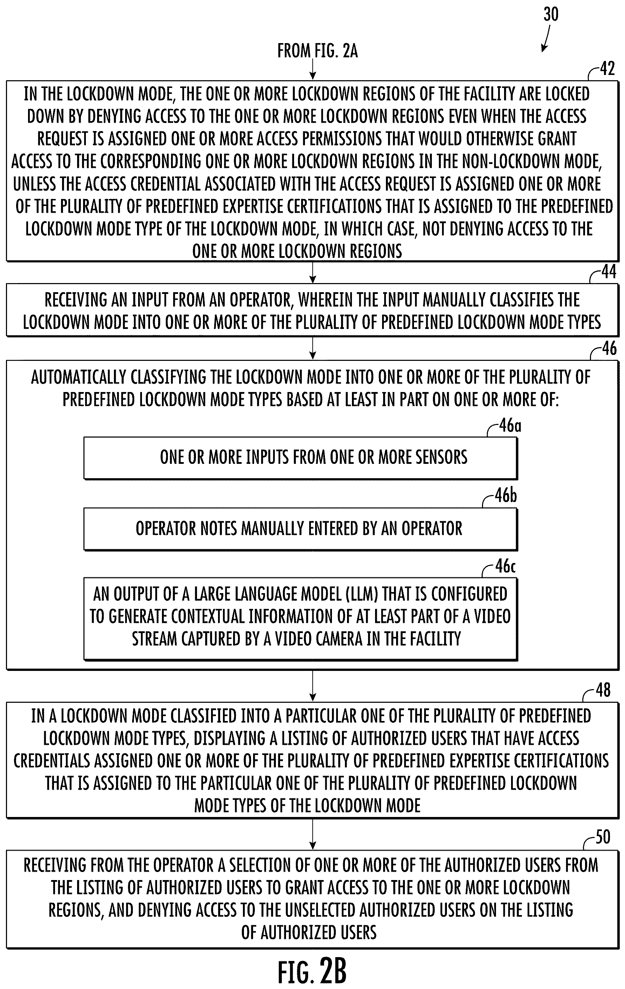

Figures 2A and 2B are flow diagrams that together show an illustrative method 30 for controlling access to each of one or more regions of a facility. The method 30 includes storing a plurality of access credentials (such as the access credentials 14) each associated with a respective authorized user of the facility, wherein each of the plurality of access credentials is assigned one or more access permissions (such as the access permissions 16) that define access rights for the respective authorized user to access each of the one or more regions of the facility, and wherein each of one or more of the plurality of access credentials is assigned one or more of a plurality of predefined expertise certifications (such as the predefined expertise certifications 18) that are associated with the respective authorized user, as indicated at block 32. Access requests are received at an access control reader of an access control system of the facility from a respective authorized user for accessing at least one region of the one or more regions of the facility, where the access request is associated with the respective access credential of the respective authorized user, as indicated at block 34. In a non-lockdown mode, and in response to receiving the access request from the respective authorized user, the illustrative method 30 includes granting or denying access to the at least one region of the facility that is associated with the access control reader based at least in part on the one or more access permissions assigned to the access credential that is associated with the access request, as indicated at block 36. In a lockdown mode, the method 30 includes locking down one or more lockdown regions of the facility by denying access to the one or more lockdown regions even when the access request is assigned one or more access permissions that would otherwise grant access to the corresponding one or more lockdown regions in the non-lockdown mode, unless the access credential associated with the access request is assigned one or more predefined expertise certifications in which case not denying access to the one or more lockdown regions, as indicated at block 38. In some cases, in the lockdown mode, access is granted only when the access request is assigned one or more access permissions that would otherwise grant access to the corresponding one or more lockdown regions in the non-lockdown mode and the access credential associated with the access request is assigned one or more predefined expertise certifications.

In some cases, the method 30 may include classifying the lockdown mode into one or more of a plurality of predefined lockdown mode types, wherein each of the plurality of predefined lockdown mode types is assigned one or more of the plurality of predefined expertise certifications, as indicated at block 40. Continuing on Figure 2B, in the lockdown mode, the one or more lockdown regions of the facility are locked down by denying access to the one or more lockdown regions even when the access request is assigned one or more access permissions that would otherwise grant access to the corresponding one or more lockdown regions in the non-lockdown mode, unless the access credential associated with the access request is assigned one or more of the plurality of predefined expertise certifications that is assigned to the predefined lockdown mode type of the lockdown mode, in which case, not denying access to the one or more lockdown regions, as indicated at block 42.

In some cases, the method 30 includes receiving an input from an operator, wherein the input manually classifies the lockdown mode into one or more of the plurality of predefined lockdown mode types, as indicated at block 44. In some cases, the method 30 includes automatically classifying the lockdown mode into one or more of the plurality of predefined lockdown mode types, as indicated at block 46. This may be based at least in part upon one or more inputs from one or more sensors, as indicated at block 46a. This may be based at least in part upon operator notes manually entered by an operator, as indicated at block 46b. This may be based at least in part upon an output of a Large Language Model (LLM) (such as the LLM 26) that is configured to generate contextual information of at least part of a video stream captured by a video camera in the facility and/or outputs from one or more of the sensors 28, as indicated at block 46c.

In some cases, the method 30 may include, in a lockdown mode classified into a particular one of the plurality of predefined lockdown mode types, displaying a listing of authorized users that have access credentials assigned one or more of the plurality of predefined expertise certifications that is assigned to the particular one of the plurality of predefined lockdown mode types of the lockdown mode, as indicated at block 48. In some cases, the listing is filtered to only include those authorized users that are within the facility. In some cases, the method 30 may include receiving from the operator a selection of one or more of the authorized users from the listing of authorized users to grant access to the one or more lockdown regions, and denying access to the unselected authorized users on the listing of authorized users, as indicated at block 50.

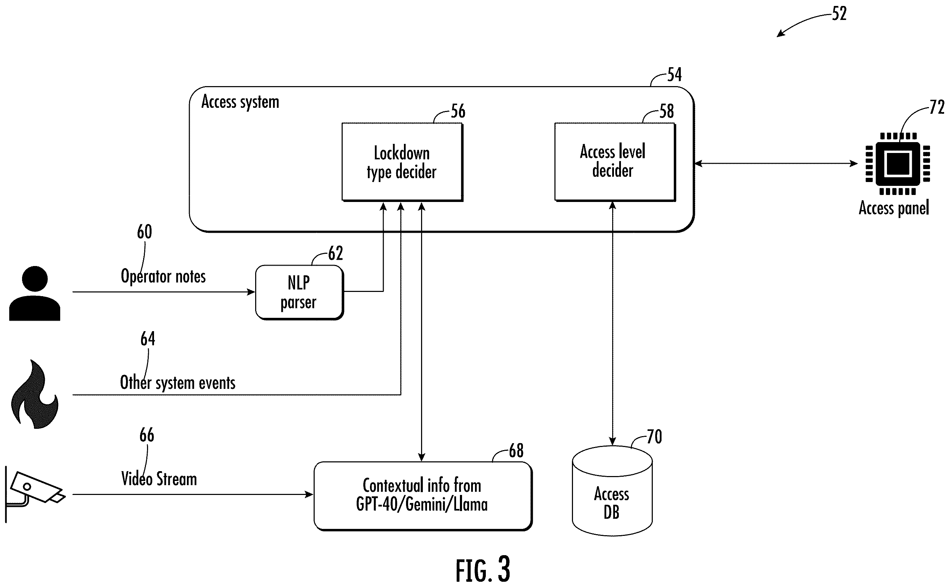

Figure 3 is a schematic block diagram providing an overview of an access control system 52. The access control system 52 may be considered as being an example of the access control system 10. The access control system 10 includes an access system 54 that includes a lockdown type decider 56 and an access level decider 58. The lockdown type decider 56 receives input from multiple sources. Operator notes 60 are provided to the lockdown type decider 56 via an NLP (Natural Language Processing) parser 62, which is a software program that analyzes a sentence and breaks it down into its grammatical components, such as nouns, verbs, phrases, and clauses, in order to understand the underlying structure of the sentence to understand the context of the operator notes. Other system events 64 are also provided to the lockdown type decider 56. These may include an output from one or more of the sensors 28 (e.g. a motion sensor, a smoke sensor, a voltage sensor, a current sensor, a glass break sensor, a gunshot detector, a microphone, a leak sensor, a water sensor and/or a chemical sensor). Contextual information from video streams 66 may be provided to the lockdown type decider 56 via an AI (Artificial Intelligence) model 68. The contextual information may be used to help determine the type of lockdown. For example, if the AI model 68 determines that fire or smoke are visible in the video stream 66, the AI model 68 may report that to the lockdown type decider 56. The access level decider 58 communicates with an access database 70. An access panel 72 communicates with the access system 54. The access panel 72 may be operatively coupled to one or more access control readers and may be configured to grant or deny access to corresponding parts of the facility. The access panel 72 may be operatively coupled to the access system 54, including the lockdown type decider 56 and the access level decider 58, to help decide whether to grant or deny access to a corresponding part of the facility in response to an access request from an authorized user (e.g. depending on the one or more access permissions assigned to the access credential of the authorized user and/or the one or more predefined expertise certifications associated to the authorized user).

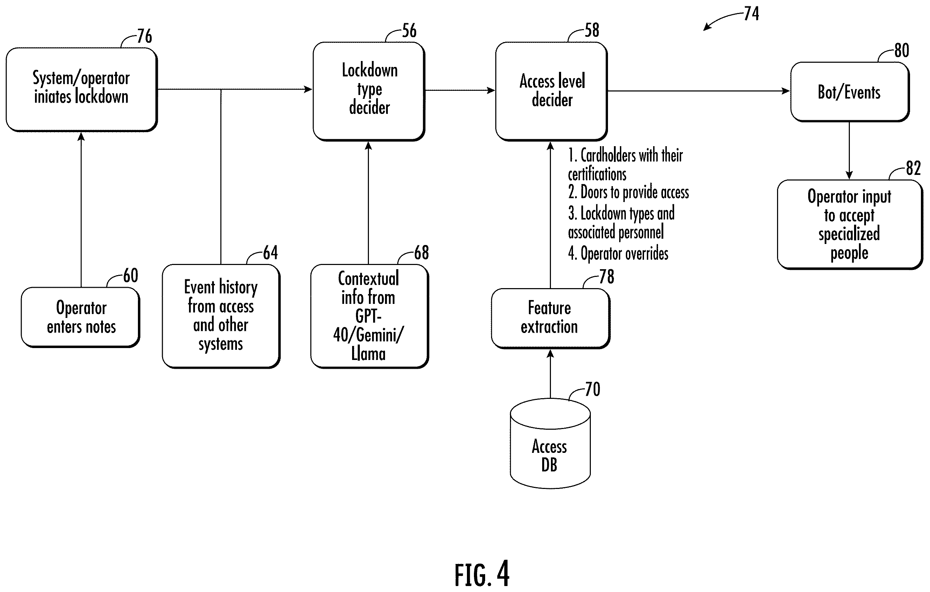

Figure 4 is a schematic block diagram providing an overview 74 of a lockdown in an access control system. Operator notes 60 are provided to a block 76, where either the system or the operator initiates a lockdown. The initiated lockdown is provided to the lockdown type decider 56, and in some cases an event history 64 (e.g. previous alarm events, previous lockdown events, previous sensor events such as motion sensor events, smoke sensor events, voltage sensor events, current sensor events, glass break sensor events, gunshot detector events, microphone events, leak sensor events, water sensor events, and/or chemical sensor events) and/or contextual information 68 extracted from video. The lockdown type decider 56 communicates with the access level decider 58. Feature extraction 78 operates on information from the access database 70 and provides its output to the access level decider 58. This may include extracting cardholders and their certifications, doors to provide access, lockdown types and associated personnel, and operator overrides, for example. In this example, the access level decider 58 communicates with a bot 80, which in turn communicates with block 82, where operator input is accepted. The bot 80 may provide a listing of authorized users that have access credentials that allow access to a lockdown region and/or have one or more predefined expertise certifications for addressing the lockdown type determined by the lockdown type decider 56. The operator input at block 82 may allow the operator to select from the bot generated listing of authorized users to actually grant access to the locked down region.

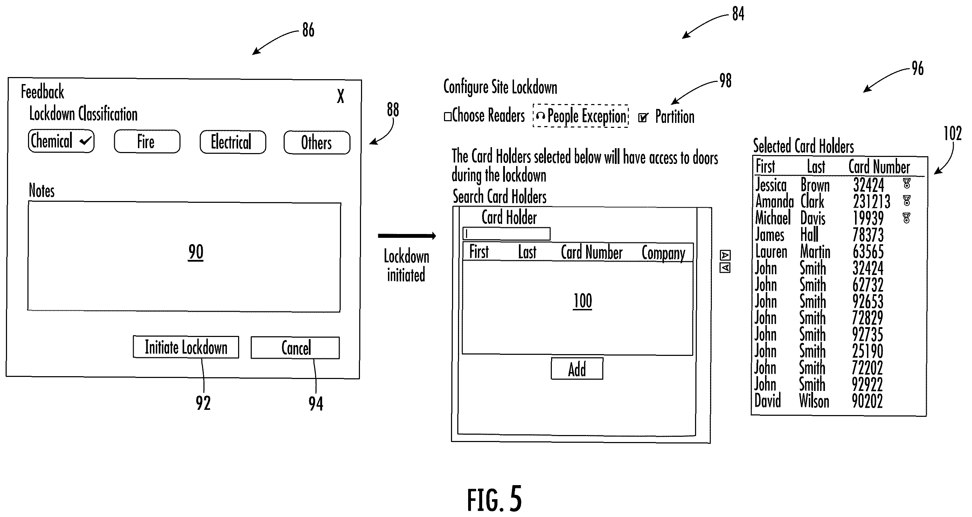

Figure 5 is an example screenshot 84 of an operator console that may be used to identify authorized users that have predefined expertise certifications for various types of lockdown events. On the left-hand side is a screenshot 86 that includes a toolbar 88 that allows an operator to manually indicate the lockdown classification type. In other cases, the lockdown classification type may be automatically identified. For example, the screenshot 86 includes a notes region 90 in which the operator can provide notes regarding the lockdown event. A lockdown type decider 56 may decides what type of lockdown is appropriate by processing the notes, as well as other information or data from other systems or sources if available (e.g. sensors and/or cameras).

In the example shown, an Initiate Lockdown button 92 allows the operator to start the lockdown and a Cancel button 94 allows the operator to cancel the lockdown and/or not start the lockdown. On the right-hand side is a screenshot 96 that may be displayed after the operator selects the Initiate Lockdown button 92. The screenshot 96 includes a toolbar 98 that allows an operator to choose between readers, people exceptions and partitions. In Figure 5, people exceptions are selected. The screenshot 96 includes a listing 100 of authorized users that should be given access to the lockdown region, and a listing 102 of available people. The operator can move people from the list 102 of available people to the list 100 of approved people. The access level decider 58 can show who are the most qualified card holders with relevant certifications icons and the operator can decide who can gain access to locked down regions.

Having thus described several illustrative embodiments of the present disclosure, those of skill in the art will readily appreciate that yet other embodiments may be made and used within the scope of the claims hereto attached. It will be understood, however, that this disclosure is, in many respects, only illustrative. Changes may be made in details, particularly in matters of shape, size, arrangement of parts, and exclusion and order of steps, without exceeding the scope of the disclosure. The disclosure's scope is, of course, defined in the language in which the appended claims are expressed.

## Claims

1. An access control system for controlling access to each of one or more regions of a facility, the access control system comprising:
a memory for storing a plurality of access credentials each associated with a respective authorized user of the facility, wherein each of the plurality of access credentials is assigned one or more access permissions that define access rights for the respective authorized user to access each of the one or more regions of the facility, and wherein each of one or more of the plurality of access credentials is assigned one or more of a plurality of predefined expertise certifications that are associated with the respective authorized user;
a plurality of access control readers each associated with at least one region of the one or more regions of the facility, wherein each access control reader is configured to receive an access request from a respective authorized user where the access request includes the respective access credential associated with the respective authorized user;
a controller having a non-lockdown mode and a lockdown mode;
wherein in the non-lockdown mode, and in response to receiving an access request at a respective one of the plurality of access control readers from a respective authorized user, grant or deny access to the at least one region of the facility that is associated with the access control reader based at least in part on the one or more access permissions assigned to the access credential that is associated with the access request; and
wherein in the lockdown mode, lock down one or more lockdown regions of the facility by denying access to the one or more lockdown regions even when an access request is received that is assigned one or more access permissions that would otherwise grant access to the corresponding one or more lockdown regions in the non-lockdown mode, unless the access credential associated with the access request is assigned one or more predefined expertise certifications in which case not denying access to the one or more lockdown regions.

2. The access control system of claim 1, wherein the lockdown mode is classified into one or more of a plurality of predefined lockdown mode types, wherein each of the plurality of predefined lockdown mode types is assigned one or more of the plurality of predefined expertise certifications; and
wherein in the lockdown mode, the one or more lockdown regions of the facility are locked down by denying access to the one or more lockdown regions even when an access request is received that is assigned one or more access permissions that would otherwise grant access to the corresponding one or more lockdown regions in the non-lockdown mode, unless the access credential associated with the access request is assigned one or more of the plurality of predefined expertise certifications that is assigned to the predefined lockdown mode type of the lockdown mode, in which case, not denying access to the one or more lockdown regions;
further, optionally, wherein the plurality of predefined lockdown mode types include one or more of a chemical lockdown mode type, an electrical lockdown mode type and a fire lockdown mode type.

3. The access control system of claim 2, wherein the controller is configured to receive an input from an operator of the access control system, wherein the input manually classifies the lockdown mode into one or more of the plurality of predefined lockdown mode types.

4. The access control system of either of claims 2-3, wherein the controller is configured to automatically classify the lockdown mode into one or more of the plurality of predefined lockdown mode types based at least in part on one or more events of an event history, wherein the invent history includes one or more of previous alarm events, previous lockdown events and previous sensor events.

5. The access control system of any of claims 2-4, wherein the controller is configured to automatically classify the lockdown mode into one or more of the plurality of predefined lockdown mode types based at least in part on an output provided by one or more sensors,
wherein the one or more sensors include one or more of: one or more of the plurality of access control readers; a motion sensor; a smoke sensor; a voltage sensor; a current sensor; a glass break sensor; a gunshot detector; a microphone; a leak sensor; a water sensor; a chemical sensor; a video camera with video analytics; and a video camera without video analytics.

6. The access control system of any of claims 2-5, wherein the controller is configured to automatically classify the lockdown mode into one or more of the plurality of predefined lockdown mode types based at least in part on one or more operator notes manually entered by an operator of the access control system.

7. The access control system of any of claims 2-6, wherein the one or more sensors include a video camera that provides a video stream, and wherein the controller is configured to automatically classify the lockdown mode into one or more of the plurality of predefined lockdown mode types based at least in part an output of a Large Language Model (LLM) that is configured to generate contextual information of at least part of the video stream captured by the video camera.

8. The access control system of any of claims 2-6, wherein once in a lockdown mode that is classified into a particular one of the plurality of predefined lockdown mode types, the controller provides a listing of authorized users to an operator of the access control system that have access credentials assigned one or more of the plurality of predefined expertise certifications that is assigned to the particular one of the plurality of predefined lockdown mode types of the lockdown mode.

9. The access control system of claim 1, wherein once in the lockdown mode, the controller provides a listing of authorized users to an operator of the access control system that have access credentials that are assigned one or more of the plurality of predefined expertise certifications.

10. The access control system of either of claims 8 or 9, wherein the controller is configured to receive from the operator of the access control system a selection of one or more of the authorized users from the listing of authorized users to grant access to the one or more lockdown regions, and denying access to the unselected authorized users on the listing of authorized users.

11. A method for controlling access to each of one or more regions of a facility, the method comprising:
storing a plurality of access credentials each associated with a respective authorized user of the facility, wherein each of the plurality of access credentials is assigned one or more access permissions that define access rights for the respective authorized user to access each of the one or more regions of the facility, and wherein each of one or more of the plurality of access credentials is assigned one or more of a plurality of predefined expertise certifications that are associated with the respective authorized user;
receiving access requests at an access control reader of an access control system of the facility from a respective authorized user for accessing at least one region of the one or more regions of the facility, where the access request is associated with the respective access credential of the respective authorized user;
in a non-lockdown mode, in response to receiving the access request from the respective authorized user, granting or denying access to the at least one region of the facility that is associated with the access control reader based at least in part on the one or more access permissions assigned to the access credential that is associated with the access request; and
in a lockdown mode, locking down one or more lockdown regions of the facility by denying access to the one or more lockdown regions even when the access request is assigned one or more access permissions that would otherwise grant access to the corresponding one or more lockdown regions in the non-lockdown mode, unless the access credential associated with the access request is assigned one or more predefined expertise certifications in which case not denying access to the one or more lockdown regions.

12. The method of claim 11, comprising:
classifying the lockdown mode into one or more of a plurality of predefined lockdown mode types, wherein each of the plurality of predefined lockdown mode types is assigned one or more of the plurality of predefined expertise certifications; and
in the lockdown mode, the one or more lockdown regions of the facility are locked down by denying access to the one or more lockdown regions even when the access request is assigned one or more access permissions that would otherwise grant access to the corresponding one or more lockdown regions in the non-lockdown mode, unless the access credential associated with the access request is assigned one or more of the plurality of predefined expertise certifications that is assigned to the predefined lockdown mode type of the lockdown mode, in which case, not denying access to the one or more lockdown regions.

13. The method of claim 12, comprising receiving an input from an operator, wherein the input manually classifies the lockdown mode into one or more of the plurality of predefined lockdown mode types.

14. The method of claim 12, comprising:
automatically classifying the lockdown mode into one or more of the plurality of predefined lockdown mode types based at least in part on one or more of:
one or more inputs from one or more sensors;
operator notes manually entered by an operator; and
an output of a Large Language Model (LLM) that is configured to generate contextual information of at least part of a video stream captured by a video camera in the facility.

15. A non-transitory computer readable medium storing instructions that when executed by one or more processors causes the one or more processors to:
store a plurality of access credentials each associated with a respective authorized user of a facility, wherein each of the plurality of access credentials is assigned one or more access permissions that define access rights for the respective authorized user to access each of one or more regions of the facility, and wherein each of one or more of the plurality of access credentials is assigned one or more of a plurality of predefined expertise certifications that are associated with the respective authorized user;
receive access requests at an access control reader of an access control system of the facility from a respective authorized user for accessing at least one region of the one or more regions of the facility, where the access request includes the respective access credential associated with the respective authorized user;
in a non-lockdown mode, in response to receiving the access request from the respective authorized user, grant or deny access to the at least one region of the facility that is associated with the access control reader based at least in part on the one or more access permissions assigned to the access credential that is associated with the access request; and
in a lockdown mode, lock down one or more lockdown regions of the facility by denying access to the one or more lockdown regions even when the access request is assigned one or more access permissions that would otherwise grant access to the corresponding one or more lockdown regions in the non-lockdown mode, unless the access credential associated with the access request is assigned one or more predefined expertise certifications in which case not denying access to the one or more lockdown regions.
